# EUROPÄISCHE PATENTSCHRIFT

(11) **EP 0 878 349 B1**
(45) Veröffentlichungstag und Bekanntmachung des Hinweises auf die Patenterteilung: **02.05.2003**
(21) Anmeldenummer: 98108200.1
(22) Anmeldetag: 06.05.1998
(51) Int. Cl.: B60P 1/44

(54) **Gelenkvorrichtung für eine Hubladebühne**
Articulation device for a loading tailgate
Dispositif d'articulation pour un hayon élévateur

(30) Priorität: 13.05.1997 DE 19719830
(43) Veröffentlichungstag der Anmeldung: 18.11.1998
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 089 941
- EP-A- 0 799 742
- DE-A- 1 580 379
- DE-A- 3 544 406
- FR-A- 2 198 853
- FR-A- 2 372 048
- US-A- 3 602 381

## Beschreibung

Die vorliegende Erfindung betrifft eine Gelenkvorrichtung für eine Hubladebühne eines Fahrzeugs mit mindestens einer, vorzugsweise mit zwei Gelenkkonsolen, in denen jeweils ein eine keilförmige Plattform tragender Tragarm und ein Hubzylinder schwenkbar gelagert sind, wobei andernends der Tragarm mit dem Hubzylinder gelenkig verbunden ist und die keilförmige Plattform trägt, und wobei die mindestens eine Gelenkkonsole jeweils an Tragelementen schwenkbar gelagert ist.

Eine derartige Gelenkvorrichtung ist beispielsweise durch die EP 0 089 941 A2 bekanntgeworden.

Bekannte Hubladebühnen weisen eine keilförmige Plattform auf, da das Hubwerk im Grundprinzip aus einem Parallelogrammantrieb besteht. Die Plattform wird bei ihrer Auf- und Abbewegung durch dieses Parallelogramm geführt. Wenn die Plattform am Boden aufsetzt, muß jedoch auch die Spitze der Plattform auf den Boden abgesenkt werden, damit eine Last auf bzw. von der Plattform gefahren werden kann.

Bei der aus der EP 0 089 941 A2 bekannten Hubladebühne ist ein Tragarm vorgesehen, der ein rohrförmiges Tragprofil und die Plattform gelenkig verbindet. Der Tragarm ist in erster Linie das Zugelement des Parallelogramms. Die Plattform, die über zwei Hubarme bzw. Hubzylinder angetrieben wird, folgt dadurch, daß der Hubzylinder über ein Kräftedreieck am Hubarm angreift. Der Tragarm und der Hubarm sind auch an ihrem anderen Ende gelenkig miteinander verbunden. Das Abneigen der Plattformspitze auf den Boden erfolgt mittels einer Gelenkvorrichtung in Form von zwei Gelenkkonsolen, in denen jeweils der Tragarm und der Hubzylinder schwenkbar gelagert sind und die ihrerseits schwenkbar am Tragprofil befestigt sind. Diese einzelnen Lagerstellen an der Gelenkkonsole sind derart zueinander angeordnet, daß die Gelenkkonsolen erst nach dem Aufsetzen der Plattform, die während des Senk- und Hubvorgangs waagerecht gehalten ist, auf den Boden jeweils relativ zum Tragprofil verschwenken. Dadurch verschwenken die Tragarme und mit ihnen auch die keilförmige Plattform, bis auch ihre Spitze auf dem Boden aufliegt. Bei dieser bekannten Gelenkvorrichtung ist die Gelenkkonsole als Schwenkarm ausgebildet, der an und zwischen zwei Tragelementen um einen durchgehenden Bolzen schwenkbar gelagert ist. Der durchgehende Bolzen ist an beiden Tragelementen befestigt und begrenzt dadurch die Schwenkbewegung des Tragarms und damit die Schwenkbewegung der Plattform.

Weiterhin ist aus der DE 31 29 789 C2 eine Gelenkvorrichtung mit einer Gelenkkonsole bekannt, die jeweils aus zwei deckungsgleichen Platten mit etwa bumerangähnlichem Querschnitt besteht, die an ihrem Rückbereich jeweils eine gerade Kante aufweisen. Dort ist ein Flacheisen eingeschweißt, das die beiden Platten zu einer Einheit verbindet und mit dem die Gelenkkonsolen in ihrer nicht verschwenkten Stellung am Tragprofil anliegen. Zwei durchgehende Bolzen, die die Lager für eine Tragarmplatte des Tragarms und für den Hubzylinder bilden, sind jeweils in den Enden beider Platten gelagert. Nahe des Bolzens für den Tragarm befindet sich auch der in beiden Platten gelagerte, durchgehende Bolzen, um den die Gelenkkonsole verschwenkbar ist. Damit trotz dieses Bolzens für die Gelenkkonsole die Schwenkbewegung des Tragarms noch ausgeführt werden kann, besitzt das Kopfteil des Tragarms eine komplizierte Ausnehmung, durch die hindurch der Bolzen der Gelenkkonsole verläuft. Da die Ausnehmung in dem Kopfteil aus Stabilitätsgründen nicht beliebig groß ausgebildet werden kann, ist der maximal mögliche Schwenkwinkel des Tragarms durch diese Ausnehmung bestimmt. Aufgrund der komplizierten Form der Ausnehmung wird das Kopfteil als Gußteil aufwendig hergestellt.

Der vorliegenden Erfindung liegt demgegenüber die Aufgabe zugrunde, bei einer Gelenkvorrichtung der eingangs genannten Art einen möglichst großen Schwenkwinkel des Tragarms und damit der Plattform zu erreichen.

Diese Aufgabe wird erfindungsgemäß dadurch gelöst, daß jede Gelenkkonsole zwei nebeneinander angeordnete Laschen aufweist, die jeweils unabhängig voneinander an Tragelementen zueinander koaxial gelagert sind, und daß der Tragarm und der Hubzylinder jeweils in den Innenraum zwischen den beiden Laschen eingreifen und dort an den beiden Laschen gelagert sind.

Die Konstruktion ist sehr einfach, da keine komplizierten Formen wie z.B. Gußteile hergestellt werden müssen. Neben dieser kostengünstigeren Fertigung der Gelenkkonsole durch lediglich zwei Laschen oder Platten kann das in die Gelenkkonsole eingreifende Kopfteil des Tragarms als gewöhnliches Drehteil ebenfalls kostengünstiger gefertigt werden. Außerdem ist diese Gelenkkonstruktion wesentlich leichter als bekannte Konstruktionen. Ein weiterer wesentlicher Vorteil besteht darin, daß die Gelenkkonsole nicht über einen durch beide Laschen gehenden Bolzen gelagert ist, sondern daß jede Lasche für sich, d.h. unabhängig von der anderen Lasche, gelagert ist. Damit kann der Innenraum zwischen beiden Laschen frei für eine Schwenkbewegungen des Tragarms und des Hubzylinders bleiben. Daher ist es möglich, einen extrem großen Schwenkwinkel zu beschreiben.

Als besonders vorteilhafte Weiterbildung dieser Ausführungsform ist vorgesehen, daß die beiden Laschen jeweils über fliegende Bolzen, die von dem mindestens einen Tragelement seitlich vorstehen, gelagert sind. Diese fliegende Bolzenverbindung, bei der die Bolzen in den Innenraum der Gelenkkonsole nur minimal eingreifen, läßt sich besonders kostengünstig fertigen.

In einer vorteilhaften Ausführungsform der Erfindung befindet sich die Drehachse der Gelenkkonsole oberhalb sowohl der Drehachse des Tragarms als auch der Drehachse des Hubzylinders. Diese Ausführungsform ist besonders geeignet für Hubladebühnen, bei denen der Tragarm ein Zugelement bildet. Durch Verschwenken der Gelenkkonsole bei auf dem Erdboden aufgesetzter Plattform wird der Tragarm verlängert und dadurch bei gleichzeitiger Verkürzung des Hubzylinders auch die Plattformspitze auf den Erdboden abgesenkt. Damit die Bewegung des Tragarms und des Hubzylinders nicht durch einen durchgehenden Lagerbolzen eingeschränkt ist, ist hier eine fliegende Bolzenlagerung der Laschen besonders vorteilhaft.

In weiterer bevorzugter Ausführungsform ist die Drehachse des Tragarms und/oder die Drehachse des Hubzylinders über einen Lagerbolzen gebildet ist, mittels dem die beiden Laschen auch drehfest miteinander verbunden werden können.

Als eine Weiterbildung dieser Ausführungsform ist vorgesehen, daß der Lagerbolzen des Tragarms und/oder der Lagerbolzen des Hubzylinders in Lageröffnungen versenkt gelagert sind.

Dabei sind vorzugsweise die Innenseiten der beiden Laschen im Bereich der Lagerung des Lagerbolzens des Hubzylinders für eine Entnahme des Lagerbolzens aus der Gelenkkonsole für Wartungs- oder Reparaturzwecke ausgespart.

Bei einer bevorzugten Ausführungsform liegt im nicht-verschwenkten Zustand die Gelenkkonsole mit ihrer Grundseite an einem Tragprpfil der Hubladebühne an. In allen Stellungen der Plattform mit Ausnahme der, in der die Plattformspitze auf den Boden abgeneigt ist, liegen die Laschen mit ihrer Rückseite am Tragprofil an.

Es zeigt:
- Fig. 1: in gebrochener Seitenansicht die Hubmechanik einer Hubladebühne entsprechend I-I in Fig. 3 mit vollständiger Ansicht eines Tragarms und eines Hubzylinders, wobei jeweils ihre obere Stellung durchgezeichnet und ihre untere Stellung gestrichelt ist;
- Fig. 2: eine Seitenansicht auf die Hubladebühne entsprechend II in Fig. 3, wobei der Tragarm und der Hubzylinder nicht dargestellt sind;
- Fig. 3: eine Schnittansicht durch eine Gelenkkonsole der Hubladebühne entsprechend III-III in Fig. 1; und
- Fig. 4: eine Seitenansicht einer die Gelenkkonsole der Fig. 3 bildenden Lasche.

Zum genauen Funktionsablauf der in der Zeichnung dargestellten Teile einer Hubladebühne wird ausdrücklich auch auf die DE 31 29 789 C2 verwiesen, deren Offenbarung hiermit einbezogen wird.

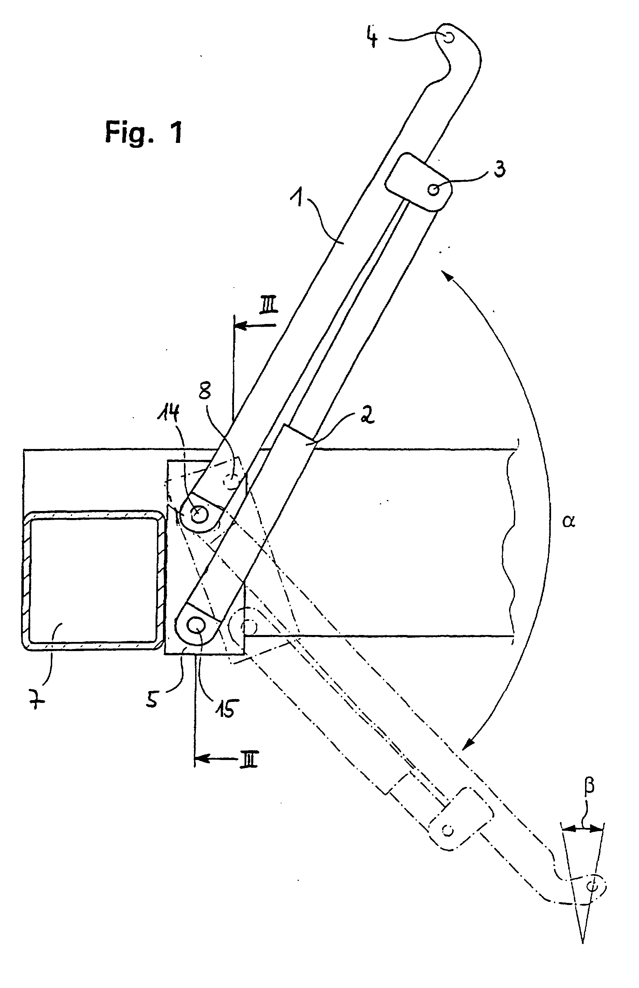

In Fig. 1 sind die wesentlichen Teile einer Hubmechanik einer an einem Fahrzeug angeordneten Hubladebühne dargestellt.

Wenn eine an zwei Tragarmen 1 gehaltene, keilförmige Plattform (nicht gezeigt) der Hubladebühne von ihrer oberen Stellung (durchgezogene Linien in Fig. 1) nach unten verschwenkt und auf den Boden aufsetzt (gestrichelte Linien in Fig. 1), können die beiden Hubzylinder 2, die über eine Bolzenverbindung 3 mit den Tragarmen 1 verbunden sind, keine Kräfte mehr aufnehmen. Das Kippmoment der Plattform übt dann jeweils über einen Tragarmbolzen 4 einen Zug auf eine Gelenkkonsole 5 aus. Dadurch verschwenken die Gelenkkonsole 5 und der Tragarm 1 und mit ihnen auch die Plattform um einen Winkel β im Uhrzeigersinn, bis auch die Plattformspitze auf dem Boden aufliegt.

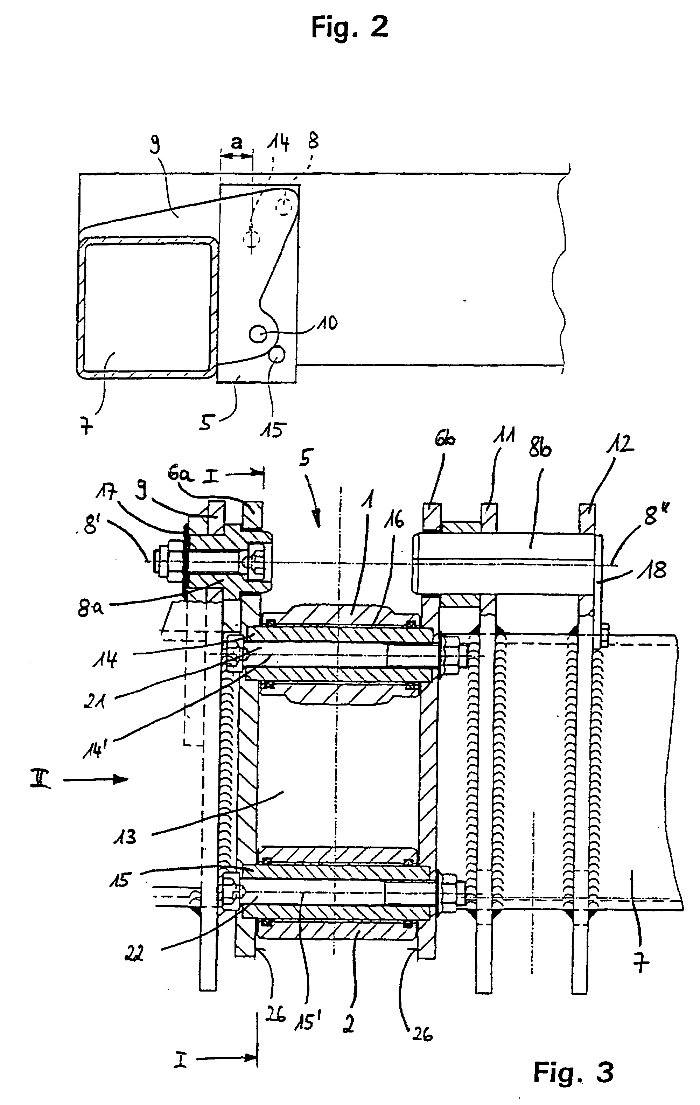

Die Gelenkkonsole 5 ist durch zwei nebeneinander angeordnete Laschen 6a, 6b (Fig. 3) gebildet, die jeweils unabhängig voneinander an einem rohrförmigen Tragprofil 7 der Hubladebühne um zueinander koaxiale Schwenkachsen 8', 8" schwenkbar gelagert. Die Schenkachsen 8', 8" sind durch Bolzen 8a, 8b definiert, wie dies auch in Fig. 1 mit der Bezugsziffer 8 angedeutet ist. Der die eine Schwenkachse 8' definierende Bolzen 8a ist an einem am Tragprofil 7 befestigten Tragelement (Anschlußplatte) 9 befestigt (Fig. 2), in der auch ein um eine Schwenkachse 10 verschwenkbarer Neigzylinder (nicht gezeigt) der Hubladebühne gelagert ist. Der die andere Schwenkachse 8" definierende Bolzen 8b ist an zwei weiteren Tragelementen 11, 12 (Fig. 3) fixiert. In den beiden Laschen 6a, 6b der Gelenkkonsole 5 sind sowohl der Tragarm 1 als auch der Hubzylinder 2, die beide in den Innenraum 13 zwischen beiden Laschen 6a, 6b eingreifen, schwenkbar um die Achsen 14' bzw. 15' über jeweils einen durchgehenden Lagerbolzen 14, 15 gelagert. Durch diese Lagerbolzen sind die beiden Laschen 6a, 6b miteinander zu einer drehfesten Einheit verbunden. Die Drehachse 8', 8" der Gelenkkonsole 5 befindet sich bei dieser Ausführungsform oberhalb sowohl der Drehachse 15' des Hubzylinders 2 als auch der Drehachse 14' des Tragarms 1. Dabei sind die Drehachsen 8', 8", 14' und 15' der Gelenkkonsole 5, des Tragarms 1 und des Hubzylinders 2 derart zueinander angeordnet, daß die Gelenkkonsole 5 während des Absenkens und Anhebens der Plattform nicht um ihre Drehachse 8', 8" verschwenkt, sondern sich nur bei auf den Erdboden abgesenkter Plattform erst durch Verkürzung des Hubzylinders 32 öffnet.

Diese Gelenkkonsole 5 erlaubt den Einsatz eines flachen, aber breiten Tragarms 1. Dadurch kann z.B. bei faltbaren Hubladebühnen der erforderliche Raum für das gefaltete Plattformpaket, welches auf den Tragarmen 1 zu liegen kommt, besser angeordnet werden. Bei dem Tragarm 1 kann durch Anschweißen einer Buchse 16 an sein in den Innenraum 13 der Gelenkkonsole 5 eingreifendes Kopfteil einfach und kostengünstig die Lagerstelle hergestellt werden. Ein weiterer Vorteil besteht darin, daß der Hubzylinder 2, der etwa den gleichen Durchmesser wie die Breite des Tragarms 1 hat, nicht mit einem gegenüber seinem Durchmesser verjüngten Lagerfuß hergestellt werden muß. Der Boden des Hubzylinders 2 kann einfach nach hinten gezogen und die Lagerstelle durch eine Bohrung hergestellt werden. Ein weiterer Vorteil der Gelenkkonsole 5 und des darin gelagerten Hubzylinders 2 und Tragarms 1 besteht darin, daß der Abstand a (Fig. 2) zwischen dem Tragprofil 7 und der Drehachse 14' bzw. der Lagerbolzen 14 des Tragarms 1 sehr gering gewählt werden kann, was für beengte Einbauverhältnisse wichtig ist.

Die beiden Bolzen 8a, 8b sind in sogenannter fliegender Bolzenanordnung gehalten, in der sie jeweils einerseits in den Innenraum 13 der Gelenkkonsole 5 vorstehen und andererseits an ihrem zugeordneten Tragelement 9 bzw. 11, 12 angeschraubt und über Bolzensicherungslaschen 17, 18 gesichert sind. So bleibt der Innenraum 13 der Gelenkkonsole 5 vollkommen frei für die Bewegungen des Tragarms 1 und Hubzylinders 2. Daher ist es möglich, einen extrem großen Winkel α (Fig. 1) zu beschreiben.

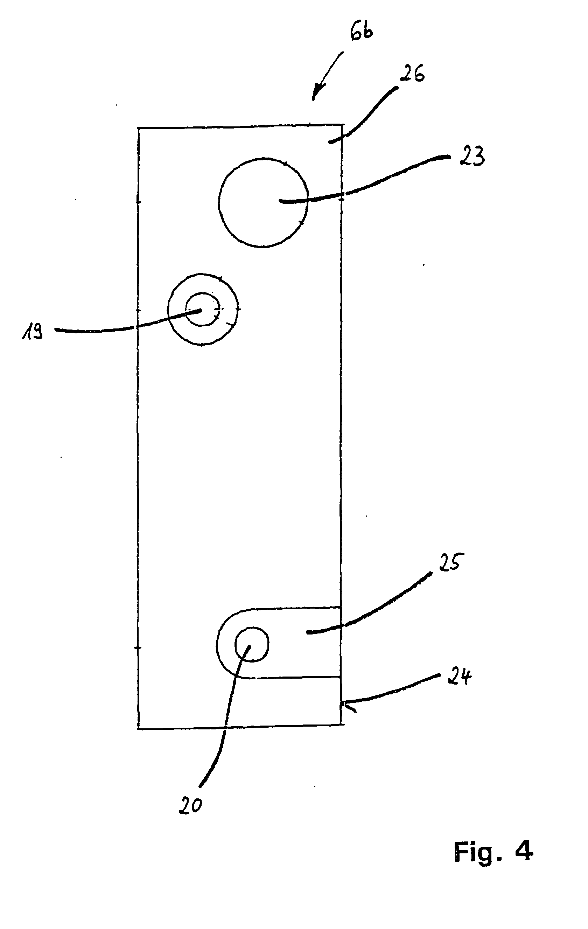

Die Lagerbolzen 14, 15 sind in entsprechenden Lageröffnungen 19, 20 in den Laschen 6a, 6b (Fig. 4) versenkt gelagert und jeweils über eine innen durchgreifende, außen verschraubte Schraube 21, 22 gesichert, während die Bolzen 8a, 8b jeweils durch eine Lageröffnung 23 in eine Lasche 6a, 6b greifen. Um zu Wartungs- oder Reparaturzwecken die Lagerbefestigung des Hubzylinders 2 lösen zu können, sind die Innenseiten 26 der Laschen 6a, 6b im Bereich der Lageröffnung 20 derart zu der vom Tragprofil 7 abgewandten Längsseite 24 über eine Aussparung 25 ausgespart, daß nach Entfernen der Schraube 22 der Lagerbolzen 15 des Hubzylinders 2 zusammen mit dessen dort gelagerten Ende über die Aussparung 25 nach außen geführt und entnommen werden kann.

## Patentansprüche

1. Gelenkvorrichtung für eine Hubladebühne eines Fahrzeugs mit mindestens einer, vorzugsweise mit zwei Gelenkkonsolen (5), in denen jeweils ein eine keilförmige Plattform tragender Tragarm (1) und ein Hubzylinder (2) schwenkbar gelagert sind, wobei andernends der Tragarm (1) mit dem Hubzylinder (2) gelenkig verbunden ist und die keilförmige Plattform trägt, und wobei die mindestens eine Gelenkkonsole (5) jeweils an Tragelementen (9, 11, 12) schwenkbar gelagert ist,
**dadurch gekennzeichnet,**
**daß** jede Gelenkkonsole (5) zwei nebeneinander angeordnete Laschen (6a, 6b) aufweist, die jeweils unabhängig voneinander an Tragelementen (9, 11, 12) zueinander koaxial gelagert sind, und daß der Tragarm (1) und der Hubzylinder (2) jeweils in den Innenraum (13) zwischen den beiden Laschen (6a, 6b) eingreifen und dort an den beiden Laschen (6a, 6b) gelagert sind.

2. Gelenkvorrichtung nach Anspruch 1, **dadurch gekennzeichnet, daß** die beiden Laschen (6a, 6b) jeweils über fliegende Bolzen (8a, 8b), die von dem mindestens einen Tragelement (9, 11, 12) seitlich vorstehen, gelagert sind.

3. Gelenkvorrichtung nach Anspruch 1 oder 2, **dadurch gekennzeichnet, daß** sich die Drehachse (8', 8'') der Gelenkkonsole (5) oberhalb sowohl der Drehachse (14') des Tragarms (1) als auch der Drehachse (15') des Hubzylinders (2) befindet.

4. Gelenkvorrichtung nach einem der vorhergehenden Ansprüche, **dadurch gekennzeichnet, daß** die Drehachse (14') des Tragarms (1) und/oder die Drehachse (15') des Hubzylinders (2) über einen Lagerbolzen (14) bzw. (15) gebildet ist.

5. Gelenkvorrichtung nach Anspruch 4, **dadurch gekennzeichnet, daß** der Lagerbolzen (14) des Tragarms (1) und/oder der Lagerbolzen (15) des Hubzylinders (2) in Lageröffnungen (19) bzw. (20) versenkt gelagert sind.

6. Gelenkvorrichtung nach Anspruch 4 oder 5, **dadurch gekennzeichnet, daß** die Innenseiten (26) der beiden Laschen (6a, 6b) im Bereich der Lagerung des Lagerbolzens (15) des Hubzylinders (2) für eine Entnahme des Lagerbolzens (15) aus der Gelenkkonsole (5) ausgespart sind.

7. Gelenkvorrichtung nach einem der vorhergehenden Ansprüche, **dadurch gekennzeichnet, daß** im nicht-verschwenkten Zustand die beiden Laschen (6a, 6b) an einem Tragprofil (7) der Hubladebühne anliegen.

## Claims

1. Articulation device for a lifting loading platform of a vehicle, with at least one and preferably two articulation brackets (5), in each of which a support arm (1), which supports a wedge-shaped platform, and a lifting cylinder (2) are pivotably mounted, the support arm (1) being connected in an articulated manner at the other end to the lifting cylinder (2) and supporting the wedge-shaped platform, and the at least one articulation bracket (5) in each case being pivotably mounted on support elements (9, 11, 12), **characterised in that** each articulation bracket (5) has two adjacently arranged straps (6a, 6b), which are each mounted independently of and coaxially with one another on support elements (9, 11, 12), and **in that** the support arm (1) and the lifting cylinder (2) each reach into the internal space (13) between the two straps (6a, 6b) and are there supported on the two straps (6a, 6b).

2. Articulation device according to Claim 1, **characterised in that** the two straps (6a, 6b) are each supported by overhung pins (8a, 8b), which project laterally from the at least one support element (9, 11, 12).

3. Articulation device according to Claim 1 or 2, **characterised in that** the axis of rotation (8', 8'') of the articulation bracket (5) is above both the axis of rotation (14') of the support arm (1) and the axis of rotation (15') of the lifting cylinder (2).

4. Articulation device according to one of the preceding claims, **characterised in that** the axis of rotation (14') of the support arm (1) and/or the axis of rotation (15') of the lifting cylinder (2) is/are formed by a bearing pin (14) or (15).

5. Articulation device according to Claim 4, **characterised in that** the bearing pin (14) of the support arm (1) and/or the bearing pin (15) of the lifting cylinder (2) is/are mounted in a recessed manner in bearing openings (19) and (20) respectively.

6. Articulation device according to Claim 4 or 5, **characterised in that** the insides (26) of the two straps (6a, 6b) are recessed in the region of the support of the bearing pin (15) of the lifting cylinder (2) to allow removal of the bearing pin (15) from the articulation bracket (5).

7. Articulation device according to one of the preceding claims, **characterised in that** the two straps (6a, 6b) rest against a support section (7) of the lifting loading platform in the unpivoted state.

## Revendications

1. Dispositif d'articulation pour un hayon élévateur d'un véhicule, avec au moins une, de préférence deux consoles d'articulation (5), dans chacune desquelles sont montés à pivotement un vérin de levage (2) et un bras porteur (1) portant une plate-forme cunéiforme, le bras porteur (1), à son autre extrémité, étant relié en articulation au vérin de levage (2) et portant la plate-forme cunéiforme, et la ou chaque console d'articulation (5) étant montée à pivotement sur des éléments porteurs respectifs (9, 11, 12),
**caractérisé en ce que** chaque console d'articulation (5) présente deux pattes juxtaposées (6a, 6b), qui sont respectivement montées coaxialement et indépendamment entre elles sur des éléments porteurs (9, 11, 12), et **en ce que** le bras porteur (1) et le vérin de levage (2) s'engagent respectivement dans l'espace intérieur (13) entre les deux pattes (6a, 6b) et y sont montés sur les deux pattes (6a; 6b).

2. Dispositif d'articulation selon la revendication 1, **caractérisé en ce que** les deux pattes (6a, 6b) sont respectivement montées par l'intermédiaire de boulons en porte à faux (8a, 8b), qui dépassent latéralement de l'élément porteur (9, 11, 12) au moins unique.

3. Dispositif d'articulation selon la revendication 1 ou 2, **caractérisé en ce que** l'axe de rotation (8', 8") de la console d'articulation (5) se trouve à la fois au-dessus de l'axe de rotation (14') du bras porteur (1) et au-dessus de l'axe de rotation (15') du vérin de levage (2).

4. Dispositif d'articulation selon l'une des revendications précédentes, **caractérisé en ce que** l'axe de rotation (14') du bras porteur (1) et/ou l'axe de rotation (15') du vérin de levage (2) sont formés par un boulon de palier (respectivement 14 ou 15).

5. Dispositif d'articulation selon la revendication 4, **caractérisé en ce que** le boulon de palier (14) du bras porteur (1) et/ou le boulon de palier (15) du vérin de levage (2) sont montés escamotés dans des ouvertures de palier (respectivement 19 ou 20).

6. Dispositif d'articulation selon la revendication 4 ou 5, **caractérisé en ce que** les côtés intérieurs (26) des deux pattes (6a, 6b) sont évidés dans la région de montage du boulon de palier (15) du vérin de levage (2), afin de déposer le boulon de palier (15) de la console d'articulation (5).

7. Dispositif d'articulation selon l'une des revendications précédentes, **caractérisé en ce que**, à l'état non pivoté, les deux pattes (6a, 6b) s'appliquent contre un profilé porteur (7) du hayon élévateur.
